# EUROPÄISCHE PATENTSCHRIFT

(11) **EP 1 746 480 B1**
(45) Veröffentlichungstag und Bekanntmachung des Hinweises auf die Patenterteilung: **18.11.2009**
(21) Anmeldenummer: 06010901.4
(22) Anmeldetag: 27.05.2006
(51) Int. Cl.: G05D 16/10, B67D 1/08

(54) **Gasregeleinheit für Home Consumption Keg**
Pressure regulating device for home comsumption keg
Regulateur de pression de gaz pour un fut a usage prive

(30) Priorität: 21.07.2005 DE 102005034784
(43) Veröffentlichungstag der Anmeldung: 24.01.2007
(73) Patentinhaber: NIRO-PLAN AG, 4663 Aarburg (CH)
(72) Erfinder: Faltin, Eberhard Diplomingenieur Maschinenbau, 57482 Wenden (DE)
(74) Vertreter: Lemcke, Brommer & Partner

(56) Entgegenhaltungen:
- DE-A1- 10 138 366
- GB-A- 976 329

## Beschreibung

Die Erfindung betrifft eine Gasregeleinheit für Home Consumption Kegs nach dem Oberbegriff von Anspruch 1 und ein Home Consumption Keg nach dem Oberbegriff des Anspruchs 12.

Unter dem Begriff Home Consumption Keg werden Behältnisse zur Aufbewahrung von Flüssigkeiten zusammengefasst, welche einen Gasbehälter aufweisen, der über eine Gasregeleinheit mit dem Flüssigkeitsbehälter verbunden ist. Über die Gasregeleinheit wird in dem Flüssigkeitsbehälter ein Überdruck verglichen mit dem Außendruck erzeugt, so dass eine Entnahme der Flüssigkeit durch einen an dem Flüssigkeitsbehälter angebrachten Hahn oder Anschluss möglich ist.

Home Consumption Kegs werden typischerweise zur Lagerung von flüssigen Lebensmitteln, insbesondere von Bier verwendet. Solch ein Home Consumption Keg ist aus der DE 101 38 366 A1 bekannt. Bei diesem Keg ist in die Wandung des Flüssigkeitsbehälters ein Fitting zum Befüllen, Reinigen und/oder Entleeren des Kegs integriert und es weist darüber hinaus einen bayerischen Anstich im Bereich des zylindrischen Umfangs des Kegs auf. An den bayerischen Anstich kann ein Hahn angeschlossen werden, über den bei Überdruck im Flüssigkeitsbehälter die Flüssigkeit entnommen werden kann.

Das Keg weist einen ringförmigen Gasbehälter auf, welcher über eine Leitung mit einem Gasfüllventil verbunden ist zum Befüllen des Gasbehälters. Der Gasbehälter weist ferner ein Reduzierventil auf, welches über eine weitere Leitung mit dem Flüssigkeitsbehälter verbunden ist, so dass der Flüssigkeitsbehälter mit einem am Reduzierventil eingestellten Druck beaufschlagt werden kann.

Bei diesem Home Consumption Keg sind somit Teile der Gasregeleinheit wie beispielsweise das Reduzierventil an dem Gasbehälter angeordnet und andere Teile, wie beispielsweise das Füllventil an dem Flüssigkeitsbehälter. Dadurch sind Leitungen erforderlich, die durch äußere Einwirkungen beschädigt werden können.

Die GB 976329 A offenbart eine Gasregeleinheit, welche aus zwei Ventilkörpern 9 und 18 besteht. In dem Ventilkörper 18 ist ein Füllventil 11 angeordnet, welches auslassseitig unmittelbar mit einem Gasbehälter 3 verbunden ist. In dem Ventilkörper 9 ist ein Regelventil 13 angeordnet, welches über eine Gasabführverbindung 14 mit einem Flüssigkeitsbehälter 2 verbunden ist. Nachteiliger Weise muss daher bei Betrieb der Gasregeleinheit der eine Ventilkörper 9 zunächst abgenommen werden, um einen Zugang zu dem Füllventil 11 um Befüllen des Gasbehälters 3 zu ermöglichen.

Der Erfindung liegt die Aufgabe zugrunde, die Gasregeleinheit für Home Consumption Kegs und das Home Consumption Keg weiter zu bilden und zu verbessern, so dass die Anfälligkeit für Beschädigungen durch äußere Einwirkungen wie beispielsweise Stöße verringert wird. Weiterhin soll der Aufbau vereinfacht und dadurch die Herstellungs- und Wartungskosten reduziert werden. Eine weitere Aufgabe ist, den Aufbau dahingehend zu verbessern, dass eine Fehlbedienung durch den Benutzer vermieden wird.

Gelöst sind diese Aufgaben erfindungsgemäß durch eine Gasregeleinheit nach Anspruch 1 und ein Home Consumption Keg nach Anspruch 12. Vorteilhafte Ausführungsformen der Gasregeleinheit finden sich in den Ansprüchen 2 bis 11 und des Home Consumption Kegs in den Ansprüchen 13 bis 16.

Die erfindungsgemäße Gasregeleinheit umfasst somit ein Füllventil und ein Regelventil, sowie eine Gasfüllverbindung, eine Gaszuführverbindung und eine Gasabführverbindung. Die Gasfüllverbindung ist einerseits mit dem Füllventil verbunden und kann andererseits an einen Gasbehälter angeschlossen werden, so dass über das Füllventil Gas in den Gasbehälter eingefüllt werden kann, bei entgegengesetztem Fluss das Füllventil jedoch schließt, so dass kein Gas aus dem Gasbehälter durch das Füllventil austritt.

Die Gaszuführverbindung ist einerseits mit dem Regelventil und andererseits so ausgeführt, dass sie mit dem Gasbehälter verbunden werden kann. Hierdurch kann Gas aus dem Gasbehälter über die Gaszuführverbindung zu dem Regelventil gelangen.

Die Gasabführverbindung wiederum verbindet das Regelventil mit dem Flüssigkeitsbehälter, so dass Gas aus dem Gasbehälter über die Gaszuführverbindung zu dem Regelventil und über die Gasabführverbindung zu dem Flüssigkeitsbehälter gelangen kann und somit der Flüssigkeitsbehälter mit einem Gasdruck beaufschlagt werden kann, welcher durch das Regelventil reguliert wird.

Die Gasregeleinheit umfasst einen Ventilkörper, in dem sowohl das Füllventil als auch das Regelventil angeordnet sind, wobei das Füllventil von außen zugänglich ist. Dadurch ergibt sich zum einen eine kompakte Bauweise, da beide Ventile in einer Einheit angeordnet sind und zum anderen kann der Ventilkörper stabil ausgeführt sein, so dass Füllventil und Regelventil von äußeren Einflüssen wie Stößen geschützt sind.

Ferner sind die Gasfüllverbindung und die Gaszuführverbindung im wesentlichen in dem Ventilkörper ausgebildet. Dadurch erübrigen sich rohrartige Leitungen, welche durch äußere Einflüsse verbogen oder anderweitig beschädigt werden könnten.

Vorteilhaft ist es, die Gasabführverbindung ebenso zumindest teilweise in dem Ventilkörper auszubilden, so dass auch sie vor Beschädigungen durch äußere Einflüsse geschützt ist.

Durch die kompakte Bauweise ist es möglich, die Gasfüllverbindung und die Gaszuführverbindung als eine kombinierte Gasfüll/Zuführverbindung auszuführen. In einer vorteilhaften Ausführungsform der Gasregeleinheit sind daher sowohl das Füllventil, als auch das Regelventil mit einer kombinierten Gasfüll/Zuführverbindung verbunden, welche wiederum derart ausgeführt ist, dass sie mit dem Gasbehälter verbunden werden kann. Die kombinierte Gasfüll/Zuführverbindung wird somit von dem Gas in zwei Richtungen durchflossen:
Beim Füllen des Gasbehälters fließt das Gas durch das Füllventil und durch die kombinierte Gasfüll/Zuführverbindung in den Gasbehälter, wohingegen beim Beaufschlagen des Flüssigkeitsbehälters mit Gasdruck das Gas von dem Gasbehälter durch die Gasfüll/Zuführverbindung zu dem Regelventil fließt.

Das Regelventil ist vorteilhafterweise als Vordruck/Hinterdruck-Regelventil ausgeführt. Bei solch einem an sich bekannten Regelventil wird die vom Regelventil durchgelassene Gasmenge durch eine Druckdifferenz bestimmt. Die Hinterdruckseite des Regelventils ist mit der Gasabführverbindung und die Vordruckseite mit der Gaszuführverbindung verbunden. Der Hinterdruck entspricht somit dem in dem Flüssigkeitsbehälter herrschenden Druck und der Vordruck dem des Gasbehälters.

Das Vordruck-/Hinterdruck-Regelventil kann so ausgeführt sein, dass abhängig von der Druckdifferenz zwischen Vordruck und Hinterdruck die Einleitung von Gas aus dem Gasraum in den Flüssigkeitsbehälter geregelt wird, das heißt, dass der Druck im Flüssigkeitsbehälter immer in einem festen vorgewählten Verhältnis zu dem Druck im Gasbehälter steht.

Besonders vorteilhaft ist es jedoch, wenn das Vordruck-/Hinterdruck-Regelventil derart ausgeführt ist, dass das Regelventil einen zusätzlichen Außendruckbereich aufweist, welcher mit der Außenseite der Gasregeleinheit und damit mit der Atmosphäre verbunden ist. In dem Außendruckbereich des Regelventils herrscht somit Atmosphärendruck und dieser wird als Führungsgröße für die Regelung des Drucks in dem Flüssigkeitsbehälter benutzt.

Das Vordruck/Hinterdruck-Regelventil kann somit derart ausgeführt sein, dass der Druck in dem Flüssigkeitsbehälter immer eine im wesentlichen voreingestellte Druckdifferenz über dem Atmosphärendruck liegt. Der Druck in dem Flüssigkeitsbehälter ist daher nicht von dem Hochdruck in dem Gasbehälter abhängig, solange der Hochdruck noch ausreichend über dem gewünschten Druck im Flüssigkeitsbehälter liegt.

Das Gas kann in dem Gasbehälter in flüssiger oder in gasförmiger Form gelagert werden. Insbesondere bei der Lagerung in gasförmiger Form führt eine Entnahme von Gas auf dem Gasbehälter zu einem Absinken des Hochdrucks. Die oben beschriebene Ausführung des Regelventils, welches derart ausgeführt ist, dass es als Führungsgröße den Atmosphärendruck benutzt weist somit den Vorteil auf, dass ein konstanter Druck im Flüssigkeitsbehälter auch bei der Lagerung von Gas in gasförmiger Form möglich ist. Dies führt zu großen Vereinfachungen und Kosteneinsparungen beim Befüllen des Gasbehälters, da bei der Lagerung von Gas in gasförmiger Form der Füllstand des Gasbehälters über den Druck ermittelt werden kann, wohingegen bei der Lagerung von Gas in flüssiger Form der Füllstand über das Gewicht des Gasbehälters ermittelt werden muss.

Zur Verbindung der Außendruckseite des Vordruck/Hinterdruck-Regelventils ist es vorteilhaft, wenn die Gasregeleinheit eine Außenverbindung aufweist, welche den Außendruckbereich des Regelventils mit der Atmosphäre verbindet. Insbesondere ist es vorteilhaft, wenn die Außenverbindung im wesentlichen im Ventilkörper ausgebildet und so vor Schäden durch äußere Einflüsse geschützt ist und außerdem im Bereich des Füllventils eine Öffnung zur Atmosphäre besitzt. Letzteres ist daher von Vorteil, da das Füllventil bei in das Home Consumption Keg eingesetzter Gasregeleinheit typischerweise an der Außenseite zu liegen kommt, so dass ein Füllschlauch von außen auf das Füllventil aufgesetzt werden kann. Entsprechend kommt auch die Öffnung der Außenverbindung an der Außenseite zu liegen, wenn sie im Bereich des Füllventils im Ventilkörper angeordnet ist.

In einer weiteren vorteilhaften Ausführungsform umfasst die Gasregeleinheit ein Rückschlagventil, welches derart in der Gasabführverbindung angeordnet ist, dass es bei Fluss in der Gasabführverbindung in Richtung der Regeleinheit sperrt. Dadurch wird verhindert, dass Flüssigkeit oder Gas aus dem Flüssigkeitsbehälter in die Gasregeleinheit eindringt. Dies ist insbesondere dann von Vorteil, wenn der Flüssigkeitsbehälter über das integrierte Fitting mit Hochdruck gereinigt wird, da dann das Rückschlagventil verhindert, dass die Reinigungsmittel in die Gasregeleinheit eindringen.

Das Rückschlagventil kann vorteilhafterweise am Ende der Gasabführverbindung angeordnet sein, so dass bei eingesetzter Gasregeleinheit das Rückschlagventil in den Flüssigkeitsbehälter hineinragt.

In einer vorteilhaften Ausführungsform ist das Füllventil ausgangsseitig an dem Eingang des Regelventils angeordnet. Dies ist insbesondere bei der Ausführung der Gasfüllverbindung und Gaszuführverbindung als eine kombinierte Gasfüll/Zuführverbindung vorteilhaft, da die kombinierte Gasfüll / Zuführverbindung mit dem Füllventil ausgangsseitig und mit dem Regelventil eingangsseitig verbunden ist.

In einer weiteren vorteilhaften Ausführungsform ist der Ventilkörper im wesentlichen zylindrisch ausgeführt. Er weist dadurch eine besonders robuste, gegen äußere Einwirkungen geschützte Form auf und kann darüber hinaus leicht in eine entsprechend im wesentlichen zylindrische Aufnahme im Home Consumption Keg eingesetzt werden, ohne dass ein Verkanten auftreten kann.

Darüber hinaus können die bei einer zylindrischen Bauform die einzelnen Druckräume der Gasregeleinheit leicht abgedichtet werden. Dies kann beispielsweise dadurch geschehen, dass an der Gasregeleinheit O-Ringe vorgesehen sind, welche in eingesetztem Zustand dichtend zwischen Gasregeleinheit und zylindrischer Aufnahme des Home Consumption Kegs liegen.

Das Regelventil ist vorteilhafterweise derart ausgeführt, dass es ein Justierelement umfasst, welches ein Einstellen des Regeldrucks, d.h. des Druckes, mit dem der Flüssigkeitsbehälter beaufschlagt wird, ermöglicht. Der Regelungsdruck wird typischerweise werkseitig (vom Hersteller der Gasregeleinheit) oder vom Befüller des Home Consumption Kegs eingestellt und sollte vom Benutzer, der die Flüssigkeit entnimmt, nicht verändert werden, um eine Gefahr durch einen zu hohen Druck im Flüssigkeitsbehälter oder eine mangelnde Funktion durch einen zu geringen Druck im Flüssigkeitsbehälter zu verhindern. Daher ist es vorteilhaft, wenn der Ventilkörper einen lösbar verbundenen Bereich aufweist und das Regelventil mit dem Justierelement derart in dem Ventilkörper angeordnet ist, dass in verbundenem Zustand des lösbar verbundenen Bereichs das Justierelement des einstellbaren Regelventils durch den lösbar verbundenen Bereich überdeckt ist, so dass ein Benutzer von außen das Justierelement nicht betätigen kann und damit der voreingestellte Druck nicht verändert werden kann.

Ein erfindungsgemäßes Home Consumption Keg umfasst einen Gasbehälter, einen Flüssigkeitsbehälter mit einem in dessen Wandung integrierten Fitting und eine Gasregeleinheit, wobei der Gasbehälter über die Gasregeleinheit mit dem Flüssigkeitsbehälter verbunden ist, so dass der Flüssigkeitsbehälter mit Druck beaufschlagt werden kann.

Das Home Consumption Keg ist derart ausgeführt, dass eine erfindungsgemäße Gasregeleinheit zumindest teilweise derart darin aufgenommen werden kann, so dass die Gasregeleinheit fest in das Home Consumption Keg integriert ist. Dies wird dadurch erreicht, dass der Gasbehälter und/oder der Flüssigkeitsbehälter eine Aufnahme für die Gasregeleinheit aufweist bzw. aufweisen, in der die Gasregeleinheit aufgenommen bzw. aufnehmbar ist.

Gasregeleinheit und Gasbehälter sind derart ausgeführt, dass bei eingesetzter Gasregeleinheit die Gasfüllverbindung und die Gaszuführverbindung der Gasregeleinheit mit dem Gasbehälter verbunden sind. Der Gasbehälter kann somit zwei Öffnungen aufweisen, die derart in der Wandung des Gasbehälters in dem Bereich, welcher bei eingesetzter Gasregeleinheit mit der Gasregeleinheit in Kontakt steht, angeordnet sind, dass eine Öffnung mit der Gaszuführverbindung und die andere Öffnung mit der Gasfüllverbindung der Gasregeleinheit verbunden ist. Somit kann durch eine Öffnung der Gasbehälter gefüllt werden und durch die andere Öffnung kann das Gas aus dem Gasbehälter in die Gasregeleinheit fließen, um den Flüssigkeitsbehälter mit Druck zu beaufschlagen.

Hierzu ist der Flüssigkeitsbehälter derart an dem Gasbehälter angeordnet, dass bei eingesetzter Gasregeleinheit die Gasabführverbindung der Gasregeleinheit mit dem Flüssigkeitsbehälter verbunden ist.

Besonders vorteilhaft ist es, wenn die Gasfüllverbindung und die Gaszuführverbindung der Gasregeleinheit wie oben beschrieben als eine kombinierte Gasfüll/Zuführverbindung ausgeführt sind. Ein Home Consumption Keg in dieser vorteilhaften Ausführungsform weist einen Gasbehälter auf, in dem lediglich eine Öffnung ausgebildet ist. Diese Öffnung ist in der Wandung des Gasbehälters in dem Bereich ausgebildet, der bei eingesetzter Gasregeleinheit mit dieser in Kontakt steht und die Öffnung ist derart angeordnet, dass sie bei eingesetzter Gasregeleinheit mit der kombinierten Gasfüll/Zuführverbindung der Gasregeleinheit verbunden ist.

In einer vorteilhaften Ausführungsform weist der Gasbehälter eine im wesentlichen zylindrische Aufnahme für die im wesentlichen zylindrisch ausgeführte Gasregeleinheit auf. In diesem Fall können die Öffnungen als Ringspalte ausgeführt sein, welche im wesentlichen senkrecht zur Symmetrieachse der im wesentlichen zylindrischen Aufnahme verlaufen. Diese Ringspalte können annähernd 360 Grad um die im wesentlichen zylindrische Aufnahme herumlaufen. Die Ringspalte sind derart in der im wesentlichen zylindrischen Aufnahme des Gasbehälters angeordnet, dass die Gasfüllverbindung und die Gaszuführverbindung der Gasregeleinheit mit jeweils einem Ringspalt verbunden sind, wenn die Gasregeleinheit in die im wesentlichen zylindrische Aufnahme eingesetzt ist. Wenn die Gasfüllverbindung und/oder die Gaszuführverbindung in der Gasregeleinheit als Bohrung in dem im wesentlichen zylindrischen Ventilkörper ausgeführt sind, so ergibt sich der Vorteil, dass beim Einsetzen der Gasregeleinheit ein Verdrehen von Gasbehälter und Gasregeleinheit bezüglich der Symmetrieachse der im wesentlichen zylindrischen Aufnahme des Gasbehälters toleriert werden kann:
Durch die Ausführung der Öffnungen in dem Gasbehälter als Ringspalt kann die Gasregeleinheit in nahezu beliebigen Winkeln in den Gasbehälter eingesetzt werden. In jeder Stellung trifft die Gasfüllverbindung und die Gaszuführverbindung auf den jeweiligen nahezu 360 Grad umlaufenden Ringspalt, so dass die Verbindung zwischen Gasbehälter und den entsprechenden Verbindungen gewährleistet ist.

In einer weiteren vorteilhaften Ausführungsform, bei der das Regelventil der Gasregeleinheit wie oben beschrieben als einstellbares Regelventil ausführt ist, welches ein Justierelement zum Einstellen des Regeldruckes umfasst, ist das Justierelement derart in der Regeleinheit angeordnet und die Aufnahme für die Gasregeleinheit derart ausgeführt, dass bei eingesetzter Gasregeleinheit das Justierelement von der Wandung des Gasbehälters überdeckt ist. Dadurch kann bei eingesetzter Gasregeleinheit das Justierelement nicht betätigt werden und eine Verstellung des Regeldruckes durch Stöße von außen oder durch den Benutzer ist somit nicht möglich.

Nachfolgend wird ein Ausführungsbeispiel der erfindungsgemäßen Gasregeleinheit und des erfindungsgemäßen Home Consumption Kegs anhand von Zeichnungen erläutert. Hierbei zeigen:
- Figur 1: eine erfindungsgemäße Gasregeleinheit für Home Consumption Kegs in einer Schnittzeichnung, wobei die Schnittebene durch die Symmetrieachse der im wesentlichen zylindrisch ausgebildeten Gasregeleinheit verläuft und
- Figur 2: eine Schnittzeichnung eines erfindungsgemäßen Home Consump- tion Kegs, wobei auch hier die Schnittebene durch die Symmetrie- achse des im wesentlichen zylindrisch ausgebildeten Home Con- sumption Kegs verläuft.

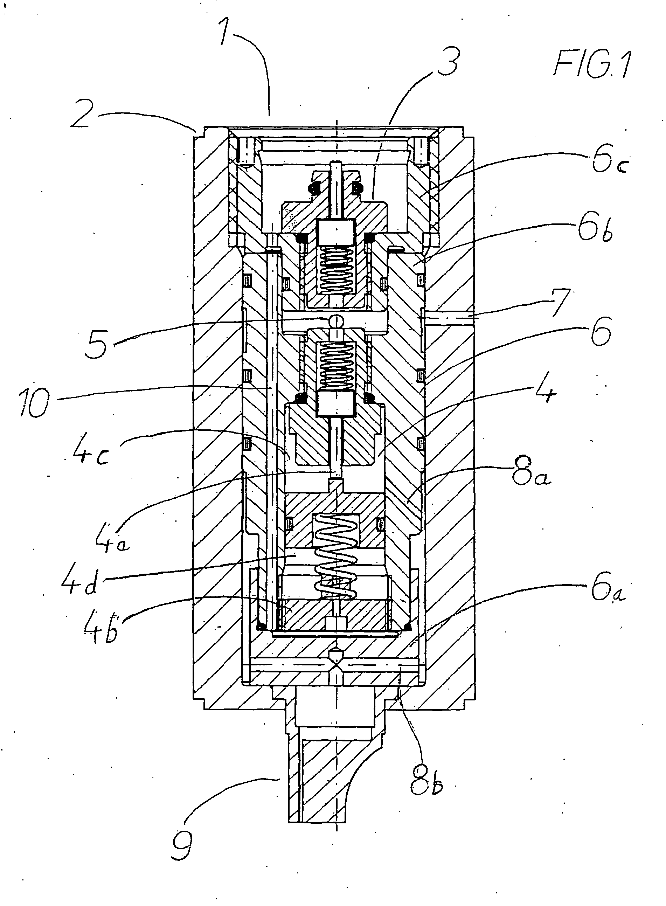

In Figur 1 ist eine Gasregeleinheit 1 für Home Consumption Kegs dargestellt, welche in ein Home Consumption Keg eingesetzt ist. Von dem Home Consumption Keg ist lediglich der Bereich der Wandung 2 des Gasbehälters dargestellt, welcher an der Gasregeleinheit 1 in eingesetztem Zustand anliegt. Die Gasregeleinheit weist ein Füllventil 3 sowie ein Regelventil 4 auf. In diesem Ausführungsbeispiel sind die Gasfüllverbindung und die Gaszuführverbindung als eine kombinierte Gasfüll/Zuführverbindung 5 ausgeführt. Die kombinierte Gasfüll/Zuführverbindung 5 ist im wesentlichen in dem Ventilkörper 6 ausgebildet, in dem das Füllventil 3 und das Regelventil 4 angeordnet sind. Der Ventilkörper 6 besteht aus drei Elementen 6a, 6b und 6c. Die Gasfüll/Zuführverbindung 5 besteht aus dem Zwischenraum zwischen der Ausgangsseite des Füllventils 3 und der Eingangsseite des Regelventils 4 sowie aus einer Bohrung in dem Ventilkörper 6, welche zu einem Ringspalt 7 in der Wandung 2 des Gasbehälters führt. Der Ringspalt 7 ist senkrecht zur Symmetrieachse der im wesentlichen zylindrischen (und einen kreisförmigen Querschnitt aufweisenden) Gasregeleinheit 1 um nahezu 360 Grad oder volle 360 Grad um die Gasregeleinheit herumgeführt. Dadurch ist die kombinierte Gasfüll/Zuführverbindung mit dem Ringspalt 7 verbunden, nahezu unabhängig von einer Verdrehung zwischen Gasbehälter und Gasregeleinheit 1 um die Symmetrieachse der im wesentlichen zylindrischen Gasregeleinheit 1.

Das Regelventil 4 ist als Vordruck/Hinterdruck-Regelventil ausgeführt. Es umfasst einen Steuerkolben 4a sowie ein Justierelement. Das Justierelement besteht aus einer Stellschraube 4b, sowie einer darüber angeordneten Feder. Die Stellschraube 4b besitzt ein Außengewinde, welches in ein entsprechendes Innengewinde in dem Ventilkörper 6 eingreift, so dass durch Verdrehen der Stellschraube 4b die mittels der über der Stellschraube angeordneten Feder ausgeübte Kraft auf den Steuerkolben 4a eingestellt werden kann.

Ebenso kann jedoch das Justierelement lediglich als eine Feder ausgeführt sein, welche einerseits mit dem Ventilkörper und andererseits mit dem Steuerkolben verbunden ist. In diesem Fall wird die auf den Steuerkolben ausgeübte Kraft nicht durch Verdrehen der Stellschraube 4b eingestellt, sondern durch Wahl einer Feder mit entsprechenden Eigenschaften, d.h. insbesondere mit einer entsprechenden Federkonstante. Auch in diesem Fall wird Herstellerseitig der Druck durch Wahl der entsprechenden Feder voreingestellt und kann später nicht mehr verändert werden.

Der Hinterdruckbereich 4c, welcher durch den Steuerkolben 4a und den Ventilkörper 6 begrenzt ist, ist über Bohrungen 8a und 8b in dem Ventilkörper 6 mit einem Rückschlagventil 9 verbunden, welches in den nicht dargestellten Flüssigkeitsbehälter des Home Consumption Kegs hineinreicht. Somit entspricht der Druck im Hinterdruckbereich 4c des Regelventils 4 dem Druck des Flüssigkeitsbehälters. Der Außendruckbereich 4d des Regelventils 4, d.h. der Bereich unter dem Steuerkolben 4a ist über eine mittige Bohrung in der Stellschraube 4b mit der Außenverbindung 10 verbunden. Die Außenverbindung 10 ist als Bohrung im Ventilkörper 6 ausgeführt und endet neben dem Füllventil 3 an der Außenseite, so dass der Druck im Außendruckbereich 4d dem Atmosphärendruck entspricht. Wenn nun der Druck im Hinterdruckbereich 4c, d.h. der Druck im Flüssigkeitsbehälter kleiner ist als der auf den Steuerkolben ausgeübte Druck durch den im Außendruckbereich 4d herrschenden Atmosphärendruck zuzüglich des Druckes der von der zwischen Justierelement 4d und Steuerkolben 4a angeordneten Feder ist, so schiebt sich der Steuerkolben 4a nach oben und öffnet das Regelventil. Hierauf fließt Gas aus dem Gasbehälter durch den Ringspalt 7 und die kombinierte Gasfüll/Zuführverbindung 5 durch das Regelventil 4 in den Hinterdruckbereich 4c und von dort über die Bohrungen 8a und 8b und das Rückschlagventil 9 in den Flüssigkeitsbehälter. Dieser Gasfluss findet solange statt, bis der Druck im Flüssigkeitsbehälter und damit der Druck im Hinterdruckbereich 4c so groß ist, dass der Steuerkolben 4a nach unten gedrückt wird, so dass sich das Regelventil 4 wieder schließt und damit auch die Verbindung zwischen Gasbehälter und Flüssigkeitsbehälter geschlossen wird.

Auf diese Weise herrscht in dem Flüssigkeitsbehälter ein stets konstanter Druck, welcher mittels der Stellschraube 4b eingestellt werden kann.

Der Ventilkörper 6 besitzt einen unteren Bereich 6a, welcher lösbar mit dem restlichen Ventilkörper verbunden ist. Wenn sich die Gasregeleinheit nicht in dem Home Consumption Keg befindet, kann der Bereich 6a des Ventilkörpers vom restlichen Ventilkörper entfernt werden und die Stellschraube 4b des Regelventils 4 kann für den gewünschten Druck voreingestellt werden. Nach Aufsetzen des lösbaren Bereiches 6a des Ventilkörpers 6 und insbesondere nach Einsetzen der Gasregeleinheit 1 in die Aufnahme des Gasbehälters ist die Stellschraube 4b von außen nicht mehr zugänglich und kann somit durch äußere Einflüsse oder durch den Benutzer nicht mehr verstellt werden. Der Druck im Flüssigkeitsbehälter kann somit werkseitig vorgewählt werden, ohne dass der Kunde dies verändern kann.

Die drei Elemente 6a, 6b und 6c des Ventilkörpers 6 sind lösbar miteinander verbunden, wobei durch entsprechend gelagerte O-Ringe die Gasdichtigkeit gewährleistet ist. Das Element 6c besitzt an der Außenseite ein Gewinde, welches in ein entsprechendes in der Wandung 2 des Gasbehälters ausgebildetes Gewinde eingreift, so dass die Gasregeleinheit 1 in den Gasbehälter eingeschraubt werden kann. Hier zeigt sich ein weiterer Vorteil der als Ringspalt 7 ausgeführten Öffnung des Gasbehälters: Dadurch, dass eine Verdrehung bezüglich der Symmetrieachse der im wesentlichen zylindrischen Gasregeleinheit 1 gegenüber dem Gasbehälter toleriert werden kann, kann die Gasregeleinheit über ein Gewinde in den Gasbehälter eingeschraubt werden, ohne dass ein genau definierter Anschlagpunkt für den eingeschraubten Zustand der Gasregeleinheit gewährleistet sein muss. Denn die Verbindung zwischen Gasregeleinheit und Gasbehälter durch die kombinierte Gasfüll/Zuführverbindung 5 ist für nahezu beliebige Drehwinkel zwischen Gasbehälter und Gasregeleinheit 1 gewährleistet.

Die kompakte Bauform der Gasregeleinheit 1, insbesondere die Anordnung des Füllventils 3, des Regelventils 4 und des Rückschlagventils 9 an dem Ventilkörper 6 ermöglicht einen robusten und zugleich kostengünstigen Aufbau.

Zum Befüllen des Gasbehälters des Home Consumption Kegs wird an das Füllventil 3 ein Gasdruckschlauch angeschlossen. Daraufhin kann durch das Füllventil 3 Gas in die kombinierte Gasfüll/Zuführverbindung 5 strömen und von dort über den Ringspalt 7 in den Gasbehälter.

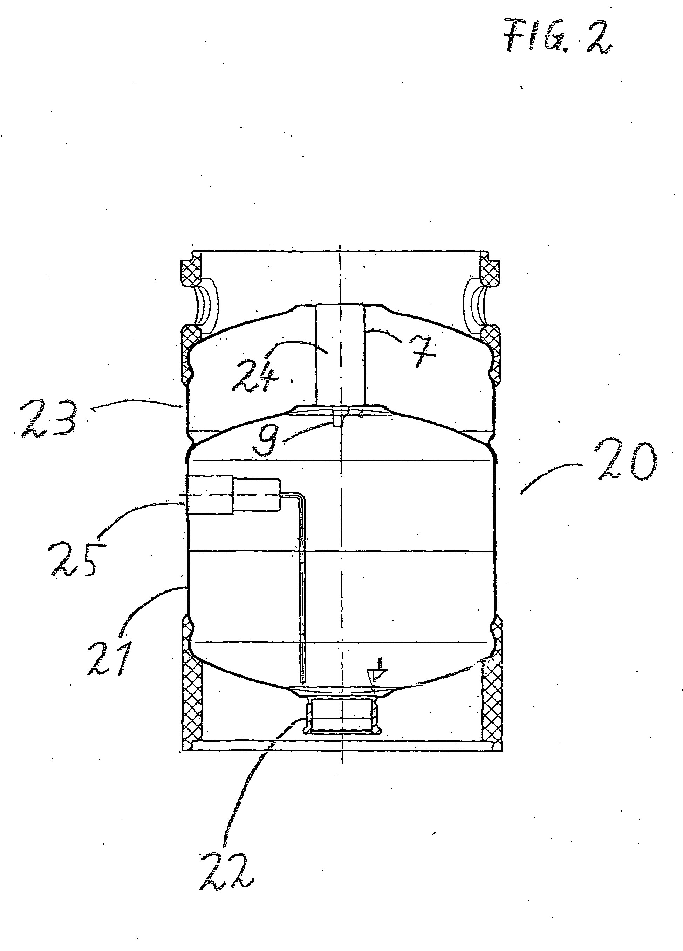

In Figur 2 ist ein Ausführungsbeispiel eines erfindungsgemäßen Home Consumption Kegs 20 dargestellt. Das Home Consumption Keg besteht aus einem Flüssigkeitsbehälter 21, in dessen Wandung ein Fitting 22 zum Befüllen, Reinigen und Entleeren des Flüssigkeitsbehälters integriert ist.

Ferner umfasst das Home Consumption Keg 20 einen Gasbehälter 23, der über dem Flüssigkeitsbehälter 21 angeordnet ist und eine Aufnahme 24 zur Aufnahme der in Figur 1 dargestellten Gasregeleinheit 1 besitzt. Die Gasregeleinheit 1 ist in Figur 2 nicht dargestellt, lediglich das Rückschlagventil 9, welches in den Flüssigkeitsbehälter 21 hineinragt, ist angedeutet.

In der Wandung des Gasbehälters 23, welche bei eingesetzter Gasregeleinheit 1 an dieser anliegt, befindet sich der Ringspalt 7, welcher den Gasbehälter mit der kombinierten Gasfüll/Zuführverbindung 5 der Gasregeleinheit 1 verbindet.

Der Flüssigkeitsbehälter weist ferner einen bayerischen Anstich 25 auf, an den ein Zapfhahn zur Entnahme der Flüssigkeit angeschlossen werden kann. Der bayerische Anstich 25 umfasst eine Steigleitung, welche bis nahe an die untere Wandung des Flüssigkeitsbehälters 21 geführt ist. Dadurch ist es möglich, die Flüssigkeit mittels des bayerischen Anstichs nahezu restlos aus dem Flüssigkeitsbehälter zu entnehmen.

Mit der vorliegenden Erfindung ist es somit erstmals möglich, eine Gasregeleinheit für Home Consumption Kegs mit fest voreingestelltem Druck in einer kompakten Bauweise in einer Einheit auszuführen.

## Patentansprüche

1. Gasregeleinheit (1) für Home Consumption Kegs (20), umfassend ein Füllventil (3) und ein Regelventil (4), sowie eine Gasfüllverbindung, eine Gaszuführverbindung und eine Gasabführverbindung (8a, 8b), wobei die Gasfüllverbindung einerseits mit dem Füllventil (3) verbunden und andererseits derart ausgeführt ist, dass sie mit einem Gasbehälter (23) verbunden werden kann,
wobei die Gaszuführverbindung einerseits mit dem Regelventil (4) verbunden und andererseits derart ausgeführt ist, dass sie mit dem Gasbehälter (23) verbunden werden kann und
wobei die Gasabführverbindung (8a, 8b) einerseits mit dem Regelventil (4) verbunden und andererseits derart ausgeführt ist, dass sie mit einem Flüssigkeitsbehälter (21) verbunden werden kann,
**dadurch gekennzeichnet,**
**dass** das Füllventil (3) und das Regelventil (4) in einem gemeinsamen Ventilkörper (6) angeordnet sind, wobei das Füllventil (3) von außen zugänglich ist, und
**dass** die Gasfüllverbindung und die Gaszuführverbindung im Wesentlichen in dem Ventilkörper (6) ausgebildet sind.

2. Gasregeleinheit (1) für Home Consumption Kegs (20) nach Anspruch 1, **dadurch gekennzeichnet,**
**dass** die Gasabführverbindung (8a, 8b) zumindest teilweise in dem Ventilkörper (6) ausgebildet ist.

3. Gasregeleinheit (1) für Home Consumption Kegs (20) nach einem der vorangehenden Ansprüche,
**dadurch gekennzeichnet,**
**dass** die Gasfüllverbindung und Gaszuführverbindung als eine kombinierte Gasfüll-/Zuführverbindung (5) ausgeführt sind.

4. Gasregeleinheit (1) für Home Consumption Kegs (20) nach einem der vorangehenden Ansprüche,
**dadurch gekennzeichnet,**
**dass** das Regelventil (4) als Vordruck/Hinterdruck-Regelventil ausgeführt ist, wobei die Hinterdruckseite (4c) des Regelventils (4) mit der Gasabführverbindung (8a, 8b) verbunden ist und die Vordruckseite mit der Gaszuführverbindung verbunden ist.

5. Gasregeleinheit (1) für Home Consumption Kegs (20) nach Anspruch 4,
**dadurch gekennzeichnet,**
**dass** die Gasregeleinheit (1) eine Außenverbindung (10) aufweist, welche einerseits mit der Atmosphäre und andererseits mit einem Außendruckbereich (4d) des Regelventils (4) verbunden ist, wobei das Regelventil (4) derart ausgeführt ist, dass der im Außendruck bereich herrschende Druck die Führungsgröße für die Druckregelung ist.

6. Gasregeleinheit (1) für Home Consumption Kegs (20) nach Anspruch 5,
**dadurch gekennzeichnet,**
**dass** die Außenverbindung (10) im Wesentlichen in dem Ventilkörper (6) ausgebildet ist und insbesondere im Bereich des Füllventils (3) mit der Atmosphäre verbunden ist.

7. Gasregeleinheit (1) für Home Consumption Kegs (20) nach einem der vorangehenden Ansprüche,
**dadurch gekennzeichnet,**
**dass** die Gasabführverbindung (8a, 8b) ein Rückschlagventil (9) umfasst, wobei das Rückschlagventil derart in der Gasabführverbindung (8a, 8b) angeordnet ist, dass es bei Fluss in der Gasabführverbindung (8a, 8b) in Richtung des Regelventils (4) sperrt.

8. Gasregeleinheit (1) für Home Consumption Kegs (20) nach Anspruch 7,
**dadurch gekennzeichnet,**
**dass** das Rückschlagventil (9) zwischen dem Regelventil (4) und dem Flüssigkeitsbehälter (21) angeordnet ist.

9. Gasregeleinheit (1) für Home Consumption Kegs (20) nach einem der vorangehenden Ansprüche,
**dadurch gekennzeichnet,**
**dass** das Füllventil (3) ausgangsseitig an dem Eingang des Regelventils (4) angeordnet ist.

10. Gasregeleinheit (1) für Home Consumption Kegs (20) nach einem der vorangehenden Ansprüche,
**dadurch gekennzeichnet,**
**dass** der Ventilkörper (6) im Wesentlichen zylindrisch ausgeführt ist.

11. Gasregeleinheit (1) für Home Consumption Kegs (20) nach einem der vorangehenden Ansprüche,
**dadurch gekennzeichnet,**
**dass** das Regelventil (4) ein einstellbares Regelventil ist, welches ein Justierelement zum Einstellen des Regeldruckes umfasst und
**dass** der Ventilkörper (6) einen lösbar verbundenen Bereich (6a) aufweist der derart ausgeführt ist, dass er in verbundenem Zustand das Justierelement des einstellbaren Regelventils (4) derart überdeckt, dass die Stellung des Justierelementes nicht verändert werden kann.

12. Home Consumption Keg (20), umfassend
einen Gasbehälter (23) und
einen Flüssigkeitsbehälter (21), mit einem in dessen Wandung integrierten Fitting (22) zum Befüllen, Reinigen und/oder Entleeren des Flüssigkeitsbehälters und eine Gasregeleinheit (1),
wobei der Gasbehälter (23) über die Gasregeleinheit (1) mit dem Flüssigkeitsbehälter (21) verbunden ist,
**dadurch gekennzeichnet,**
**dass** der Gasbehälter (23) und/oder der Flüssigkeitsbehälter (21) eine Aufnahme (24) aufweist, in der eine Gasregeleinheit (1) nach einem der vorangehenden Ansprüche zumindest teilweise aufgenommen ist, wobei der Gasbehälter und/oder der Flüssigkeitsbehälter derart ausgeführt ist, dass bei eingesetzter Gasregeleinheit (1) eine Gasfüllverbindung und eine Gaszuführverbindung der Gasregeleinheit mit dem Gasbehälter (23) verbunden sind,
**dass** der Flüssigkeitsbehälter (21) eine Öffnung zur Aufnahme einer Gasabführverbindung (8a, 8b) der Gasregeleinheit (1) aufweist und der Flüssigkeitsbehälter (21) derart an dem Gasbehälter (23) angeordnet ist, dass bei eingesetzter Gasregeleinheit (1) eine Gasabführverbindung (8a, 8b) der Regeleinheit mit dem Flüssigkeitsbehälter (21) verbunden ist.

13. Home Consumption Keg (20) nach Anspruch 12 und Anspruch 3,
**dadurch gekennzeichnet,**
**dass** in dem Gasbehälter (23) lediglich eine Öffnung (7) ausgebildet ist zum Zu- und Abführen von Gas, wobei die Öffnung in dem Bereich der Wandung des Gasbehälters (23) ausgeführt ist, der bei eingesetzter Gasregeleinheit (1) an der kombinierte Gasfüll-/Zuführverbindung (5) der Gasregeleinheit (1) anliegt.

14. Home Consumption Keg (20) nach einem der Ansprüche 12 bis 13,
**dadurch gekennzeichnet,**
**dass** der Gasbehälter (23) und/oder der Flüssigkeitsbehälter (21) eine im wesentlichen zylindrische Aufnahme für die Gasregeleinheit (1) aufweist.

15. Home Consumption Keg (20) nach den Ansprüchen 13 und 14,
**dadurch gekennzeichnet,**
**dass** die Öffnung (7) als Ringspalt ausgeführt ist, welcher im wesentlichen senkrecht zur Symmetrieachse der im wesentlichen zylindrischen Aufnahme verläuft.

16. Home Consumption Keg (20) nach einem der Ansprüche 12 bis 15,
**dadurch gekennzeichnet,**
**dass** das Regelventil (4) ein einstellbares Regelventil ist, welches ein Justierelement zum Einstellen des Regeldruckes umfasst und
**dass** das Justierelement derart in der Regeleinheit angeordnet ist und die Aufnahme für die Gasregeleinheit (1) derart ausgeführt ist, dass bei eingesetzter Gasregeleinheit (1) das Justierelement von der Wandung des Gasbehälters (23) überdeckt ist.

## Claims

1. Gas control unit (1) for home consumption kegs (20), comprising a filling valve (3) and a control valve (4), as well as a gas fill connection, a gas supply connection and a gas discharge connection (8a, 8b), wherein the gas fill connection is on the one hand connected to the filling valve (3) and on the other hand is designed in such a way that it can be connected to a gas tank (23),
wherein the gas supply connection on the one hand is connected to the control valve (4) and on the other hand is constructed in such a way that it can be connected to the gas tank (23) and
wherein the gas discharge connection (8a, 8b) on the one hand is connected to the control valve (4) and on the other hand is designed in such a way that it can be connected to a liquid tank (21),
**characterised in that**
the filling valve (3) and the control valve (4) are disposed in a common valve body (6), wherein the filling valve (3) is accessible from the exterior, and
that the gas fill connection and the gas supply connection are constructed substantially in the valve body (6).

2. Gas control unit (1) for home consumption kegs (20) as claimed in Claim 1, **characterised in that** the gas discharge connection (8a, 8b) is constructed at least partially in the valve body (6).

3. Gas control unit (1) for home consumption kegs (20) as claimed in any one of the preceding claims, **characterised in that** the gas filling connection and the gas supply connection are designed as a combined gas filling/supply connection (5).

4. Gas control unit (1) for home consumption kegs (20) as claimed in any one of the preceding claims, **characterised in that** the control valve (4) is designed as a primary/secondary control valve, wherein the secondary pressure side (4c) of the control valve (4) is connected to the gas discharge connection (8a, 8b) and the primary pressure side is connected to the gas supply connection.

5. Gas control unit (1) for home consumption kegs (30) as claimed in Claim 4, **characterised in that** the gas control unit (1) has an external connection which is connected on the one hand to the atmosphere and on the other hand to an external pressure region (4d) of the control valve (4), wherein the control valve (4) is constructed in such a way that the pressure prevailing in the external pressure is the reference variable for the pressure control.

6. Gas control unit (1) for home consumption kegs (20) as claimed in Claim 5, **characterised in that** the external connection (10) is constructed substantially in the valve body (6) and is connected to the atmosphere in particular in the region of the filling valve (3).

7. Gas control unit (1) for home consumption kegs (20) as claimed in any one of the preceding claims, **characterised in that** the gas discharge connection (8a, 8b) comprises a non-return valve (9), wherein the non-return valve is disposed in the gas discharge connection (8a, 8b) in such a way that when gas flows in te gas discharge connection (8a, 8b) it shuts off the flow in the direction of the control valve (4).

8. Gas control unit (1) for home consumption kegs (20) as claimed in Claim 7, **characterised in that** the non-return valve (9) is disposed between the control valve (4) and the liquid tank (21).

9. Gas control unit (1) for home consumption kegs (20) as claimed in any one of the preceding claims, **characterised in that** the filling valve (3) is disposed at the inlet of the control valve (4).

10. Gas control unit (1) for home consumption kegs (20) as claimed in any one of the preceding claims, **characterised in that** the valve body (6) is of substantially cylindrical construction.

11. Gas control unit (1) for home consumption kegs (20) as claimed in any one of the preceding claims, **characterised in that** the control valve (4) is an adjustable control valve which comprises an adjusting element for adjusting the control pressure and that the valve body (6) has a releasably connected region (6a) which is constructed in such a way that in the connected state it covers the adjusting element of the adjustable control valve (4) in such a way that the position of the adjusting element cannot be changed.

12. Home consumption keg (20), comprising a gas tank (23) and a liquid tank (21), with a fitting (22) integrated into the wall thereof for filling, cleaning and/or emptying of the liquid tank and a gas control unit (1),
wherein the gas tank (23) is connected to the liquid tank (21) by way of the gas control unit (1),
**characterised in that** the gas tank (23) and/or the liquid tank (21) has a receptacle (24) in which a gas control unit (1) according to any one of the preceding claims is at least partially received, wherein the gas tank and/or the liquid tank is designed in such a way that when the gas control unit (1) is installed a gas filling connection and a gas supply connection of the gas control unit are connected to the gas tank (23),
that the liquid tank (21) has an opening to receive a gas discharge connection (8a, 8b) of the gas control unit (1) and the liquid tank (21) is disposed on the gas tank (23) in such a way that when a gas control nit (1) is used a gas discharge connection (8a, 8b) of the control unit is connected to the liquid container (21).

13. Home consumption keg (20) as claimed in Claim 12 and Claim 13, **characterised in that** only one opening (7) is constructed for the supply and discharge of gas, wherein the opening is constructed in the region of the wall of the gas tank (23) which when the gas control unit (1) is installed rests on the combined gas fill/supply connection (5) of the gas control unit (1).

14. Home consumption keg (20) as claimed in any one of Claims 12 to 13, **characterised in that** the gas tank (23) and/or the liquid tank (21) has a substantially cylindrical receptacle for the gas control unit (1).

15. Home consumption keg (20) as claimed in Claims 13 and 14, **characterised in that** the opening (7) is designed as an annular gap which extends substantially perpendicular to the axis of symmetry of the substantially cylindrical receptacle.

16. Home consumption keg (20) as claimed in any one of Claims 12 to 15, **characterised in that** the control valve (4) is an adjustable control valve which comprises an adjusting element for adjustment of the control pressure, and that the adjusting element is disposed in the control unit in such a way and the receptacle for the gas control element (1) is designed in such a way that when the gas control unit (1) is installed the adjusting element is covered by the wall of the gas tank (23).

## Revendications

1. Unité de régulation de gaz (1) pour des fûts à usage domestique (20), comprenant une soupape de remplissage (3) et une soupape de régulation (4), ainsi qu'un raccord de remplissage de gaz, un raccord d'apport de gaz et un raccord d'évacuation de gaz (8a, 8b),
sachant que le raccord de remplissage de gaz, d'une part est relié à la soupape de remplissage (3), et d'autre part est réalisé de telle sorte qu'il peut être relié à un réservoir de gaz (23),
sachant que le raccord d'apport de gaz, d'une part est relié à la soupape de régulation (4), et d'autre part est réalisé de telle sorte qu'il peut être relié au réservoir de gaz (23), et sachant que le raccord d'évacuation de gaz (8a, 8b), d'une part est relié à la soupape de régulation (4), et d'autre part est réalisé de telle sorte qu'il peut être relié à un réservoir de liquide (21),
**caractérisée en ce que** la soupape de remplissage (3) et la soupape de régulation (4) sont disposées dans un corps de soupape commun (6), sachant que la soupape de remplissage (3) est accessible de l'extérieur,
et **en ce que** le raccord de remplissage de gaz et le raccord d'apport de gaz sont formés pour l'essentiel dans le corps de soupape (6).

2. Unité de régulation de gaz (1) pour des fûts à usage domestique (20) selon la revendication 1, **caractérisée en ce que** le raccord d'évacuation de gaz (8a, 8b) est formé au moins pour partie dans le corps de soupape (6).

3. Unité de régulation de gaz (1) pour des fûts à usage domestique (20) selon l'une des revendications précédentes, **caractérisée en ce que** le raccord de remplissage de gaz et le raccord d'apport de gaz sont réalisés sous la forme d'un raccord combiné (5) de remplissage et d'apport de gaz.

4. Unité de régulation de gaz (1) pour des fûts à usage domestique (20) selon l'une des revendications précédentes, **caractérisée en ce que** la soupape de régulation (4) est réalisée sous forme de régulation de pression amont/pression aval, sachant que le côté de pression aval (4c) de la soupape de régulation (4) est relié au raccord d'évacuation de gaz (8a, 8b) et que le côté de pression amont est relié au raccord d'apport de gaz.

5. Unité de régulation de gaz (1) pour des fûts à usage domestique (20) selon la revendication 4, **caractérisée en ce que** l'unité de régulation de gaz (1) présente un raccord externe (10) qui est relié d'une part à l'atmosphère et d'autre part à une zone de pression externe (4d) de la soupape de régulation (4), sachant que la soupape de régulation (4) est réalisée de telle sorte que la pression régnant dans la zone de pression externe est la grandeur pilote pour la régulation de pression.

6. Unité de régulation de gaz (1) pour des fûts à usage domestique (20) selon la revendication 5, **caractérisée en ce que** le raccord externe (10) est formé pour l'essentiel dans le corps de soupape (6) et est notamment relié à l'atmosphère dans la région de la soupape de remplissage (3).

7. Unité de régulation de gaz (1) pour des fûts à usage domestique (20) selon l'une des revendications précédentes, **caractérisée en ce que** le raccord d'évacuation de gaz (8a, 8b) comprend un clapet antiretour (9), sachant que le clapet antiretour est disposé dans le raccord d'évacuation de gaz (8a, 8b) de telle sorte que, lors d'un écoulement dans la raccord d'évacuation de gaz (8a, 8b), il se ferme en direction de la soupape de régulation (4).

8. Unité de régulation de gaz (1) pour des fûts à usage domestique (20) selon la revendication 7, **caractérisée en ce que** le clapet antiretour (9) est disposé entre la soupape de régulation (4) et le réservoir de liquide (21).

9. Unité de régulation de gaz (1) pour des fûts à usage domestique (20) selon l'une des revendications précédentes, **caractérisée en ce que** le côté de sortie de la soupape de remplissage (3) est disposé à l'entrée de la soupape de régulation (4).

10. Unité de régulation de gaz (1) pour des fûts à usage domestique (20) selon l'une des revendications précédentes, **caractérisée en ce que** le corps de soupape (6) est réalisé essentiellement cylindrique.

11. Unité de régulation de gaz (1) pour des fûts à usage domestique (20) selon l'une des revendications précédentes, **caractérisée en ce que** la soupape de régulation (4) est une soupape de régulation réglable qui comprend un élément d'ajustement pour régler la pression de régulation,
et **en ce que** le corps de soupape (6) présente une région (6a) assemblée de manière amovible qui est réalisée de telle sorte que, dans l'état assemblé, elle recouvre l'élément d'ajustement de la soupape de régulation réglable (4) de telle sorte que la position de l'élément d'ajustement ne peut pas être modifiée.

12. Fût à usage domestique (20) comprenant
un réservoir de gaz (23),
un réservoir de liquide (21), avec un piquage (22) intégré dans sa paroi pour remplir, nettoyer et/ou vider le réservoir de liquide,
et une unité de régulation de gaz (1),
sachant que le réservoir de gaz (23) est relié au réservoir de liquide (21) par l'intermédiaire de l'unité de régulation de gaz (1),
**caractérisé en ce que** le réservoir de gaz (23) et/ou le réservoir de liquide (21) présentent un logement (24) dans lequel est au moins partiellement reçue une unité de régulation de gaz (1) selon l'une des revendications précédentes, sachant que le réservoir de gaz et/ou le réservoir de liquide sont réalisés de telle sorte que, lorsque l'unité de régulation de gaz (1) est installée, un raccord de remplissage de gaz et un raccord d'apport de gaz de l'unité de régulation de gaz sont reliés au réservoir de gaz (23),
et **en ce que** le réservoir de liquide (21) présente une ouverture pour recevoir un raccord d'évacuation de gaz (8a, 8b) de l'unité de régulation de gaz (1), et le réservoir de liquide (21) est disposé sur le réservoir de gaz (23) de telle sorte que, lorsque l'unité de régulation de gaz (1) est installée, le raccord d'évacuation de gaz (8a, 8b) de l'unité de régulation est relié au réservoir de liquide (21).

13. Fût à usage domestique (20) selon la revendication 12 et la revendication 3, **caractérisé en ce qu'**une seule ouverture (7) est formée dans le réservoir de gaz (23) pour l'apport et l'évacuation de gaz, sachant que l'ouverture est réalisée dans la région de la paroi du réservoir de gaz (23) qui, lorsque l'unité de régulation de gaz (1) est installée, s'applique contre le raccord combiné (5) de remplissage et d'apport de gaz de l'unité de régulation de gaz (1).

14. Fût à usage domestique (20) selon l'une des revendications 12 et 13, **caractérisé en ce que** le réservoir de gaz (23) et/ou le réservoir de liquide (21) présente un logement essentiellement cylindrique pour l'unité de régulation de gaz (1).

15. Fût à usage domestique (20) selon les revendications 13 et 14, **caractérisé en ce que** l'ouverture (7) est réalisée sous forme de fente annulaire, qui s'étend essentiellement perpendiculairement à l'axe de symétrie du logement essentiellement cylindrique.

16. Fût à usage domestique (20) selon l'une des revendications 12 à 15, **caractérisé en ce que** la soupape de régulation (4) est une soupape de régulation réglable qui comprend un élément d'ajustement pour régler la pression de régulation,
et **en ce que** l'élément d'ajustement est disposé dans l'unité de régulation de telle sorte, et le logement pour l'unité de régulation de gaz (1) est réalisé de telle sorte, que, lorsque l'unité de régulation de gaz (1) est installée, l'élément d'ajustement est recouvert par la paroi du réservoir de gaz (23).
